# EUROPEAN PATENT SPECIFICATION

(11) **EP 4 403 781 B1**
(45) Date of publication and mention of the grant of the patent: **01.07.2026**
(21) Application number: 23220267.1
(22) Date of filing: 27.12.2023
(51) Int. Cl.: F16B 4/00, F16B 47/00, A24C 5/32, A24C 5/47, B33Y 80/00, B65B 19/22, B65B 41/06, B65B 51/02, B65B 59/04, B65G 29/02, B65G 47/84, B65G 47/91

(54) **METHOD TO INTERLOCK TWO COMPONENTS OF AN AUTOMATIC MACHINE FOR MANUFACTURING OR PACKING CONSUMER ARTICLES**
VERFAHREN ZUM VERRIEGELN ZWEIER KOMPONENTEN EINER AUTOMATISCHEN MASCHINE ZUR HERSTELLUNG ODER VERPACKUNG VON VERBRAUCHSARTIKELN
PROCÉDÉ DE VERROUILLAGE MUTUEL DE DEUX COMPOSANTS D'UNE MACHINE AUTOMATIQUE POUR LA FABRICATION OU L'EMBALLAGE D'ARTICLES DE CONSOMMATION

(30) Priority: 20.01.2023 IT 202300000792
(43) Date of publication of application: 24.07.2024
(73) Proprietor: G.D S.p.A., 40133 Bologna (IT)
(72) Inventor: MILANESI, Giovanni, 40133 Bologna (IT); COPERTINO, Stefano, 40133 Bologna (IT); MONTANARI, Dario, 40133 Bologna (IT); ROCCHI, Gianluca, 40133 Bologna (IT)
(74) Representative: Studio Torta S.p.A.

(56) References cited:
- CN-A- 102 917 616
- DE-C2- 3 034 360
- IT-A1- 202000 029 408

## Description

### CROSS-REFERENCE TO RELATED APPLICATIONS

This patent application claims priority from Italian patent application no. 102023000000792 filed on January 20, 2023.

### TECHNICAL FIELD

The present invention relates to a method to interlock two components of an automatic machine for manufacturing or packing consumer articles.

### PRIOR ART

An automatic machine for manufacturing or packing consumer articles is known to have two interlocking components, wherein a projection of a first component is inserted into a correspondingly (or complementarily) shaped recess of a second component, so that the two components interlocking with each other have surfaces contacting each other which create the coupling. A high dimensional accuracy of the components avoids gaps, thereby ensuring optimum coupling of the two components.

Recently, additive manufacturing (3D printing) has found frequent use in the manufacture of automated machine components. Starting from a virtual object, in particular a 3D model generated by Computer-Aided Design (CAD), the three-dimensional object is manufactured by adding one layer of material on top of the other. This technology can be used to process a variety of materials including polymers, metals, and composites.

Additive manufacturing is particularly advantageous compared to traditional subtractive technologies because it makes it possible to achieve complex shapes (often difficult to achieve by subtractive manufacturing) in one piece, reduce processing waste and therefore optimize the material used, reduce production costs and times in the case of small lots, and it also enables high product customization and rapid prototyping. Additive manufacturing, on the other hand, does not achieve the high dimensional and shape accuracy achievable by traditional subtractive machining using machine tools; consequently, when two components are made to interlock and at least one of the two components is made by additive manufacturing, gaps usually occur between the contact surfaces of the interlocked components and therefore the coupling between the components is not optimal.

Commonly used ways to avoid gaps between two interlocked components, when at least one of the two components is made by additive manufacturing, are the following: applying welding points where the recess and the projection of the two interlocked components are in contact with each other; performing additional machining on the component made by additive manufacturing to achieve high dimensional accuracy; or manufacturing the component through additive manufacturing several times by varying its dimensional parameters and the parameters of the machine used for manufacturing, so as to obtain the size necessary to achieve the optimum coupling between the components. However, the known solutions listed above have drawbacks, in contrast to the main benefits of using additive manufacturing. In the first solution, by applying welding points, additional machining is added to the interlock, i.e., the welding which, among other things, causes the interlock to be no longer separable and therefore prevents future disassembly of the component; in the second solution, one or more subtractive processes are added to the component made through additive manufacturing in order to achieve the high dimensional accuracy, generating, inter alia, waste resulting from the removed material; in the third solution, once the geometric and process parameters have been determined on a given machine, there is no guarantee that these parameters are appropriate for use in other machines of the same technology for the manufacturing of the piece, making the process of manufacturing the piece, and therefore the interlock, non-repeatable, hence increasing the production costs and times linked to setting up the process on a new machine. A method to interlock two components of the prior art is shown in IT 202000029408 A1.

### DESCRIPTION OF THE INVENTION

The object of the present invention is to provide a method to interlock two components of an automatic machine for manufacturing or packing consumer articles, which method is free from the drawbacks described above and in particular allows two components, at least one of which is made by additive manufacturing, to be interlocked with no gaps.

In accordance with the present invention, a method to interlock two components of an automatic machine for manufacturing or packing consumer articles is provided as claimed in the appended claims.

The following description describes preferred embodiments of the present invention, which is defined by the appended claims.

### BRIEF DESCRIPTION OF THE DRAWINGS

The present invention will now be described with reference to the accompanying drawings, which illustrate a non-limiting embodiment thereof, wherein:
- Figure 1 is a perspective view of a blank feeding drum of an automatic machine for making cigarette packets;
- Figures 2 and 3 are two different perspective views of a component of the feeding drum in Figure 1;
- Figure 4 is a schematic cross-sectional view of two components of the feeding drum in Figure 1 interlocked through a dovetail interlock;
- Figure 5 is a view on an enlarged scale of a detail of the component in Figures 2 and 3; and
- Figure 6 is a longitudinal sectional view of the detail in Figure 5.

### PREFERRED EMBODIMENTS OF THE INVENTION

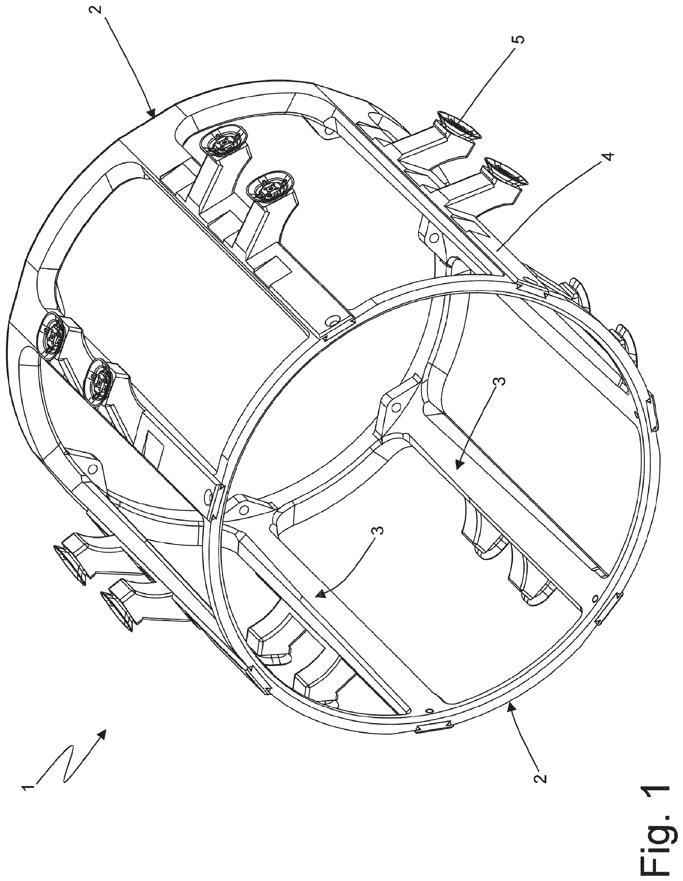

Reference number 1 in Figure 1 indicates, as a whole, a blank feeding drum of an automatic machine (not shown) for making cigarette packets.

The feeding drum 1 comprises two bases 2 with a circular shape, which are joined to each other by a plurality of axially arranged support elements 3. Each support element 3 is coupled to a corresponding transport bar 4 which is provided with (at least) two sucking holding heads 5. In use, the rotation of the feeding drum 1 around a central rotation axis cyclically causes each transport bar 4 to pass through a loading station, where the two sucking holding heads 5 pick up a blank from the bottom of a hopper, and an unloading station, where the two sucking holding heads 5 release the blank.

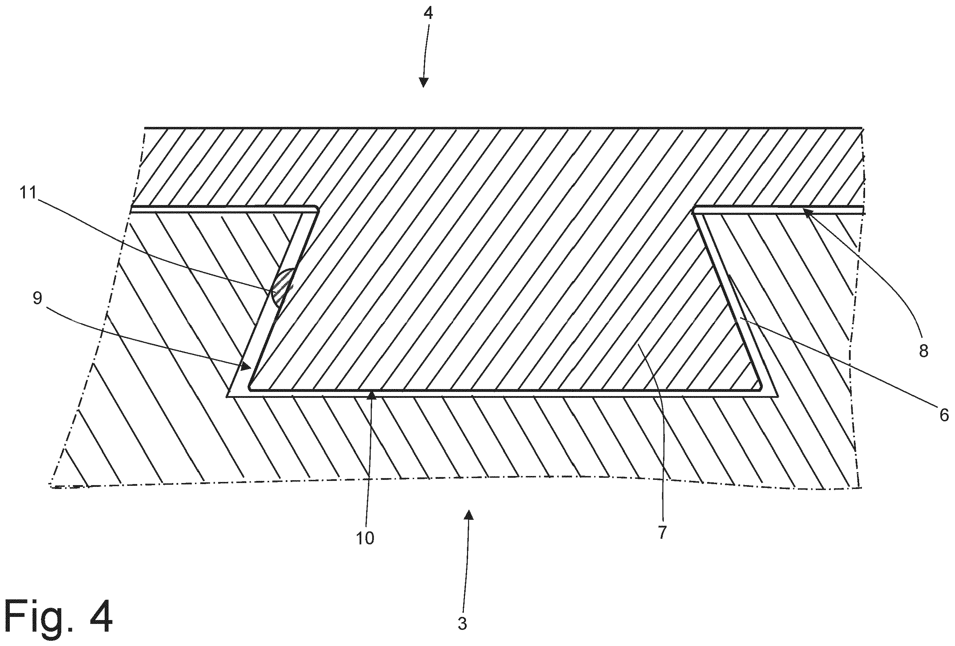

As shown in Figure 4, each transport bar 4 is coupled to the respective support element 3 by a dovetail interlock which extends axially (i.e., parallel to the axis of rotation of the feeding drum 1). As a result, each support element 3 has a trapezoidal-shaped recess 6, and each transport bar 4 has a trapezoidal-shaped projection 7 reproducing the shape of the recess 6 in order to engage the recess 6 (as far as possible) without gaps. The interlocking between each support element 3 and the respective transport bar 4 comprises joining the support element 3 and the transport bar 4 by inserting the projection 7 of the transport bar 4 into the recess 6 of the support element 3.

Each transport bar 4 has a main wall 8 from which the trapezoidal-shaped projection 7 (in particular in the shape of an isosceles trapezium, i.e., a dovetail) rises cantilevered, which has two side walls 9 inclined relative to one another and a central base wall 10 interposed between the two side walls 9.

The two side walls 9 and the base wall 10 of the projection 7 define the interlocking surfaces, as they allow the transport bar 4 to be interlocked to a respective support element 3 (i.e., to another component of the feeding drum 1) upon their contact with the corresponding surfaces of the recess 6 obtained in the support element 3. In other words, for the dovetail interlocking to occur, a transport bar 4 (which is the male part of the interlock) is provided with the trapezoidal projection 7, and a support element 3 (which is the female part of the interlock) must have the recess 6, the shape of which is perfectly complementary to the shape of the projection 7, and the contact between the two interlocked components (i.e., the transport bar 4 and the support element 3) is established on the oblique side walls 9 and on the base wall 10 of the projection 7.

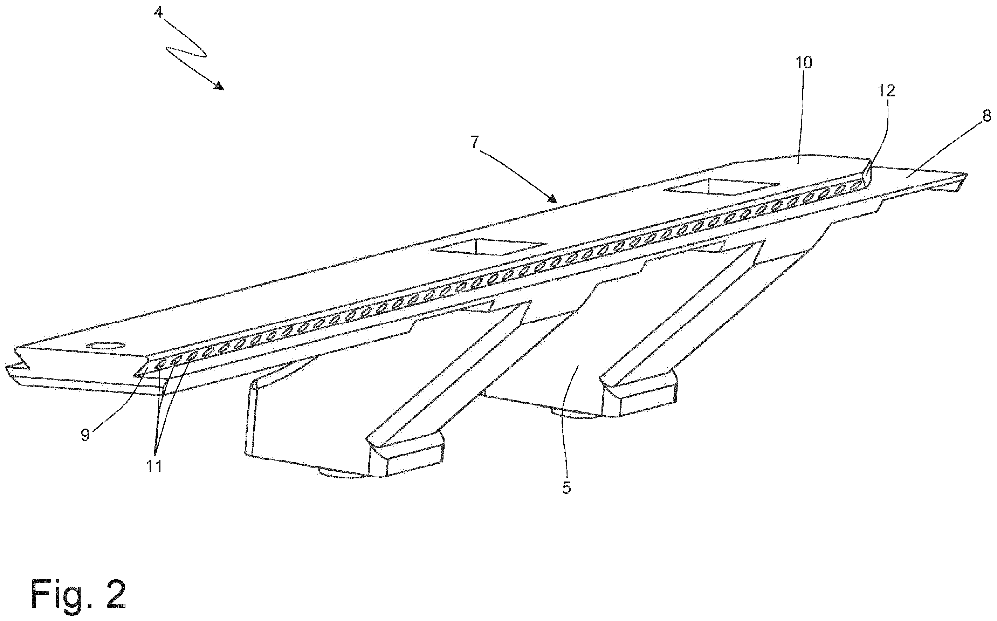

As shown in Figures 2-6, each transport bar 4 has a plurality of protuberances 11, which rise cantilevered from both inclined side walls 9 of the projection 7 and are arranged at regular intervals from one another; in other words, on each inclined side wall 9 the protuberances 11 form an equally spaced row parallel to a sliding direction along which the projection 7 progressively enters the recess 6. When the projection 7 of a transport bar 4 is inserted into the recess 6 of the respective support element 3 (with the insertion occurring along the sliding direction), the protuberances 11 projecting from the inclined side walls 9 of the projection 7 deform (plastically and/or elastically) due to interference with the respective inner walls of the recess 6; that is, each protuberance 11 is sized to have a certain degree of interference with the respective inner wall of the recess 6 and therefore must deform (plastically and/or elastically) to be able to enter the recess 6.

According to a possible embodiment, the insertion of the projection 7 of a support bar 4 into the recess 6 of a support element 3 may also result in a removal - at least partial - of one or more protuberances 11 (i.e., one or more protuberances 11 in addition to deforming also experience at least a partial loss of material).

In the embodiment shown in the attached figures, in order to ensure full contact between the interlocking surfaces of the recess 6 and the dovetail projection 7, respectively, the dovetail projection 7 is provided with a plurality of protuberances 11 on both inclined side walls 9. According to other embodiments, not shown, the protuberances 11 are also or only located on the base wall 10 of the dovetail projection 7 or on only one of the inclined side walls 9 of the dovetail projection 7. Alternatively, the protuberances 11 are also or only located on the interlocking surfaces of the recess 6 of each support element 3. In other words, the protuberances 11 can be present on at least one of the interlocking surfaces of the component (the transport bar 4) having the projection 7 and/or of the component (the support element 3) having the recess 6.

According to a preferred embodiment, the protuberances 11 are made of the same material as the projection 7, i.e., as the transport bar 4, and are an integral part of the projection 7, i.e., of the transport bar 4; in other words, the protuberances 11 are an integral part, without gaps, of the projection 7, i.e., of the transport bar 4. In this embodiment, each transport bar 4 (and therefore the protuberances 11 which are an integral part of the transport bar 4) is made of a different material having a lower hardness than a material making up each support element 3.

According to other embodiments, the protuberances 11 are made of a material different from that of the projection 7, i.e., of the transport bar 4; in this embodiment, the material making up the protuberances 11 has a lower hardness than the material making up the projection 7, i.e., the transport bar 4. According to the prior art, the hardness of a given material is defined as an empirical property that quantifies the ability of that material to resist a plastic (and therefore permanent) deformation, such as an incision, a penetration, or a scratch. Generally, a material can be plastically, i.e., permanently, deformed by another material having a higher hardness.

According to a preferred embodiment shown in the attached figures, each protuberance 11 has a spherical curvature (i.e., it has a partially spherical shape such as a hemispherical shape); according to other embodiments, not shown, each protuberance 11 has a different curvature than the spherical curvature, for example it may have an ellipsoid curvature (therefore a semi-ellipsoidal shape, for example) or a paraboloid curvature (therefore a semi-paraboloid shape, for example).

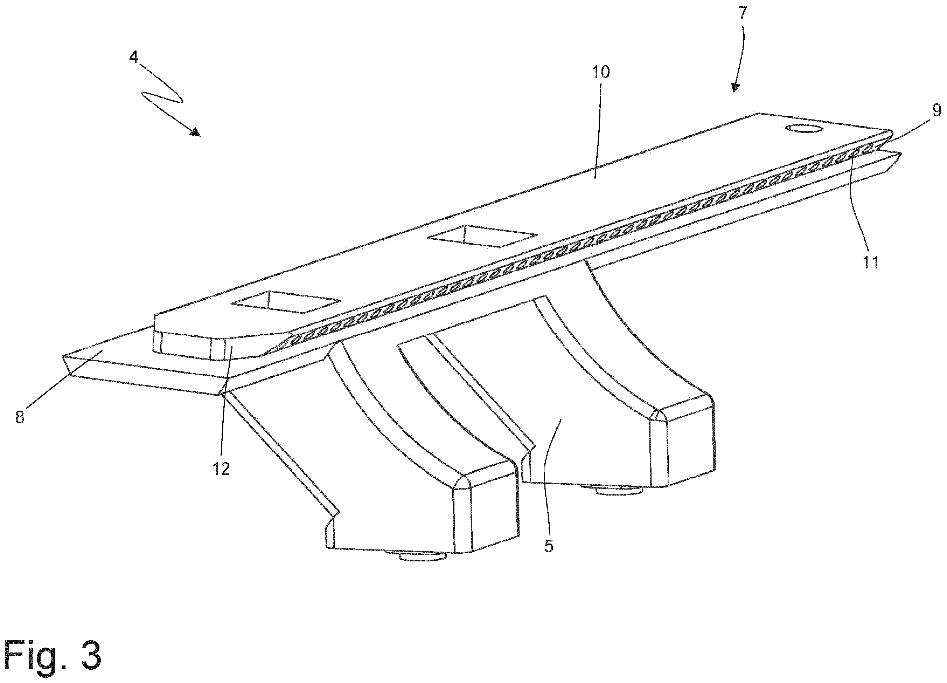

As shown in Figures 2 and 3, the dovetail projection 7 of each support bar 4 is preferably (but not necessarily) provided with a flared lead-in edge 12 suitable for facilitating the insertion of the projection 7 into the recess 6 of a corresponding support element 3.

According to a preferred embodiment shown in the attached figures, the dovetail projection 7 of each support bar 4 only rises from a limited portion of the axial extension of the main wall 8, i.e., a (minority) part of the main wall 8 is left without the dovetail projection 7. According to different embodiments, not shown, the dovetail projection 7 of each support bar 4 rises from the entire axial extension of the main wall 8.

The following describes how to create the interlock between a transport bar 4 and a support element 3, which essentially comprises three steps: lead-in, sliding, and stopping. In the first lead-in step, the transport bar 4 enters the recess 6 in the support element 3 at the flared lead-in edge 12, which facilitates its insertion. In fact, when the flared lead-in edge 12 is inserted, the side walls 9 of the projection 4 do not come into contact with the side surfaces of the recess 6 of the support element 3, in particular, only the main wall 8 and the base wall 10 of the projection 7 are in contact with the corresponding surfaces of the recess 6 of the support element 3. In short, this first lead-in step only involves the sliding of the main wall 8 and the base wall 10 of the projection 7 on the corresponding surfaces of the recess 6.

The second interlock sliding step begins when the flared lead-in edge 12 of the projection 7 ends. This step involves the sliding of all the walls 9 and 10 of the projection and the main wall 8 of the transport bar 4 on the corresponding surfaces of the recess 6 of the support element 3.

In the third interlock stopping step, a head wall of the support bar 4 is abutted against a stop provided in the recess 6 of the support element 3.

In other cases, when the flared lead-in edge 12 is not present, the first lead-in step is omitted, and the interlocking is achieved by performing the second sliding step and the third stopping step. In further cases, the recess 6 has no stop, and the interlocking is achieved by performing the second sliding step alone (and optionally the first lead-in step).

The second sliding step is the feature for the interlocking between the two components (the transport bar 4 and the support element 3) that ensures the reliability of the joint.

In the embodiment shown in the attached figures, the transport bars 4 (provided with the protuberances 11) are made by additive manufacturing (3D printing) which allows objects (finished or semi-finished products) to be created by adding successive layers of material. Instead, in the embodiment shown in the attached figures, the support elements 3 (and therefore also the bases 2) that are devoid of the protuberances 11 can be made by traditional production methods (casting and/or machining with chip removal) or can be made through additive manufacturing (3D printing).

Generally, the component on which to make the protuberances 11 is selected based on the technology chosen for the production of the interlocking components.

Considering two components to be interlocked to each other, if only one of them is made by additive manufacturing, the protuberances 11 shall be provided thereon. If, considering two components to be interlocked to each other, both components are made by additive manufacturing, then the component made of the material with the lowest hardness shall be provided with the protuberances 11. In other words, the protuberances 11 are provided on only one of either of the two components of the interlock, whether provided with the recess 6 or the projection 7, provided that this component is made of a material that is less hard than the other and made by additive manufacturing. According to a further embodiment, not shown, the protuberances 11 could be present on both components of the interlock.

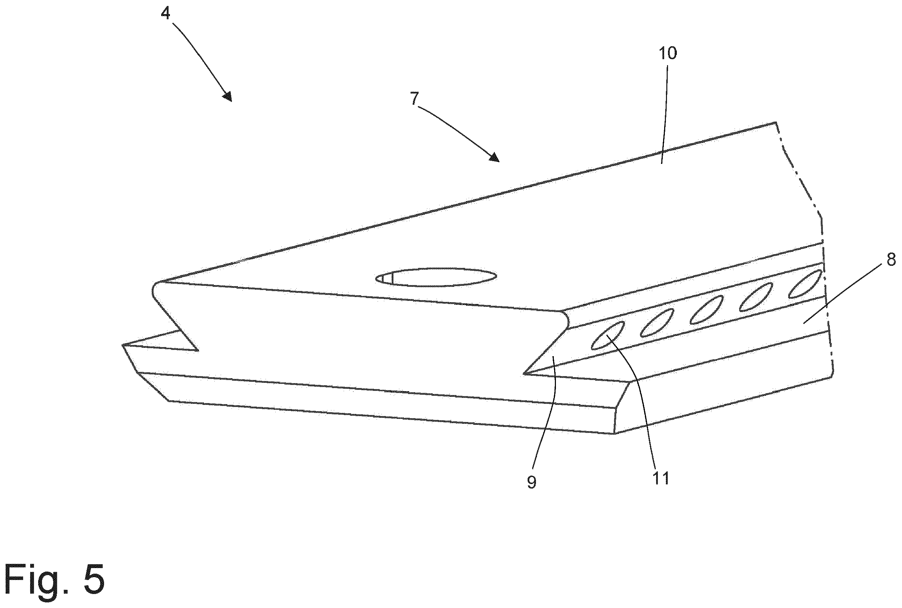

Figure 5 shows a detail of a transport bar 4, specifically a side wall 9 provided with the protuberances 11.

In the preferred embodiment of the invention, there are many protuberances 11, which are arranged on the side walls 9 of the projection 7 and are equidistant from one another. Advantageously, but not necessarily, the protuberances 11 are aligned along the direction in which the two components slide relative to each other when they interlock.

During the second interlock sliding step, when the transport bar 4 and the support element 3 slide relative to each other, the protuberances 11 on the side walls 9 of the projection 7 are plastically (or, at least partly, elastically) deformed, the material of the transport bar 4 having a lower hardness than the material of the support element 3.

The protuberances 11 being aligned along the direction in which the two components slide relative to each other when they interlock, during the second interlock sliding step, the protuberances 11 are deformed one at a time, thereby facilitating the insertion of the projection 7 into the recess 6.

In one embodiment, not shown, the component made by additive manufacturing may also have a single protuberance 11, or multiple protuberances arranged at different distances from one another, in particular not aligned with one another.

The use of protuberances 11 which are not aligned with each other in the direction of sliding of the components can make it difficult to interlock the components, in particular by increasing the sliding resistance due to high interference of the protuberances 11 of the projection 7 with the respective surface of the recess 6. Nevertheless, this embodiment still allows the advantages of the method described above for the interlocking of two components.

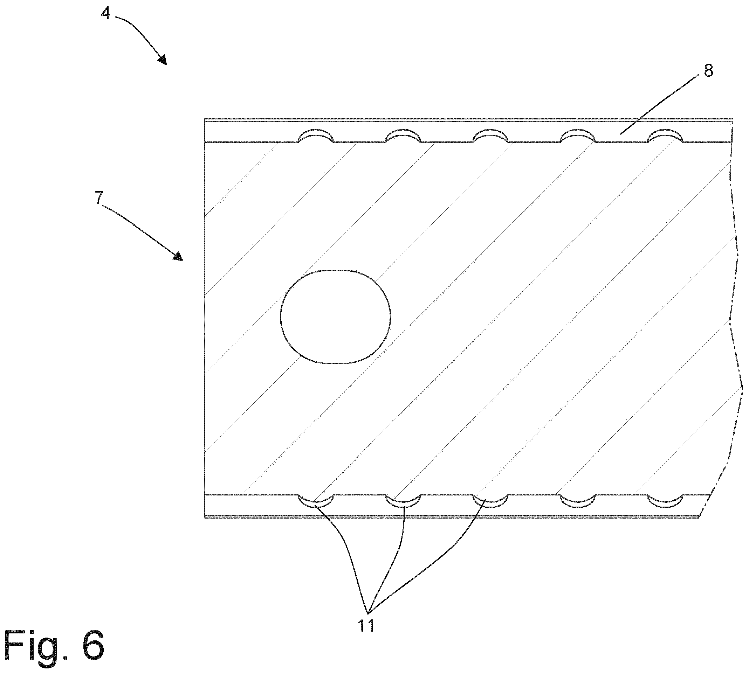

Figure 6 shows a partial section of the transport bar 4, in particular of the detail in Figure 5. In the non-limiting embodiment shown in the attached figures, each protuberance 11 has a substantially spherical curvature. According to a different embodiment, the surface of the protuberance 11 may have a different curvature from the spherical curvature.

In case there is a plurality of protuberances 11, they may have different thicknesses. The thickness is defined as the maximum height of a protuberance 11 relative to the surface from which it rises. In particular, the protuberances 11 may be of increasing thickness from the flared lead-in edge 12 so as to facilitate the insertion of the projection 7 into the recess 6.

In the preferred embodiment, the protuberances 11 are made of the same material as the transport bar 4 made by additive manufacturing. It follows that the protuberances 11 are provided in the virtual 3D model of the component supplied to the additive manufacturing machine and produced at the same time as the component manufacturing process. In a different embodiment, the protuberances 11 are made of a different material and produced at the same time as the component manufacturing process by changing the material, or by using additive manufacturing machines capable of using multiple materials during a single manufacturing process.

From the above, it is clear that the manufacturing of the feeding drum 1 involves manufacturing each support element 3 with the respective recess 6, manufacturing each transport bar 4 with the respective projection 7 reproducing the shape of the recesses, and then joining each transport bar 4 to the corresponding support element 3 by inserting the projection 7 of the transport bar 4 into the recess 6 of the support element 3.

In the preferred embodiment shown in the attached figures, the interlock between each transport bar 4 and the corresponding support element 3 is shaped like a dovetail to obtain a solid joint suitable to withstand continuous stresses because its trapezoidal shape maximizes the contact surfaces between the recess 6 and the projection 7, and it is also particularly difficult to separate the two components once they are interlocked. In other embodiments, not shown, the recess 6 and the projection 7 have a different shape, for example a rectangular shape.

In the non-limiting embodiment described above, the two components that are interlocked are a transport bar 4 and a support element 3 of a blank feeding drum 1, but the same type of interlocking can also be advantageously used for other types of components, made (at least one or both) through additive manufacturing, of any type of automatic machine (i.e., any class of products). For example, the above-described interlocking of two components may be applied in automatic machines for manufacturing and packing articles for a plant, a construction, a product for example, but not only, in the tobacco, pharmaceutical, food or entertainment sector; more generally, the above-described interlocking of two components may be applied when joining two components of a machine of any type. The embodiments described herein may be combined with each other without departing from the scope of protection of the present invention, as long as the new combinations fall within the wording of the appended claims.

The method described above for interlocking two components has many advantages. First of all, the method described above for interlocking two components allows a zero-gap interlocking when at least one of the two components is made by additive manufacturing.

Generally, to achieve effective interlocking, i.e., a stable (without relative movement of the components) and long-lasting (without loss of effectiveness over time) coupling, the components must be machined with high precision, particularly on the interlocking surfaces, to ensure zero gaps between the components. In the case of metal components made by subtractive manufacturing, the dimensional accuracy that ensures the coupling accuracy is achieved with manual or numerically controlled machine tools. The two components thus interlocked do not have the possibility to move relative to each other, thereby ensuring reliability of the operations carried out with the automatic machine in question. In the case of at least one component manufactured by additive manufacturing, it is not possible to guarantee (except through subsequent processing, which increases the time and costs) the accuracy necessary to obtain a gap-free interlock; this problem is solved simply (i.e., without any significant increase in time and costs) and effectively by the presence of the protuberances 11, which completely eliminate any gaps since they are sized to exhibit interference (i.e., being deformed when they interlock).

The method described above for interlocking two components avoids additional processing, such as welding, to effectively join the two components.

The method described above for interlocking two components avoids post-production subtractive technology machining of the components made by additive manufacturing with the aim of obtaining accuracies suitable for achieving an effective interlocking between the components.

The method described above for interlocking two components reduces the processing waste material, by using additive manufacturing only, thereby reducing the costs related to the production materials.

The method described above for interlocking two components allows the process for manufacturing the component made by additive manufacturing to be repeatable on different machines operating through the same technology, thereby avoiding the increase in production costs and times.

The method described above for interlocking two components is relatively simple and inexpensive to implement.

### LIST OF REFERENCE NUMBERS IN THE FIGURES

- 1: feeding drum
- 2: bases
- 3: support elements
- 4: transport bars
- 5: holding heads
- 6: recess
- 7: projection
- 8: main wall
- 9: side walls
- 10: base wall
- 11: protuberances
- 12: flared lead-in edge

## Claims

1. A method to interlock two components (3, 4) of an automatic machine for manufacturing or packing consumer articles; the method comprises the steps of:
manufacturing a first component (3) with a recess (6);
manufacturing a second component (4) with a projection (7) reproducing the shape of the recess (6); and
joining the two components (3, 4) by inserting and locking the projection (7) of the second component (4) in the recess (6) of the first component (3);
wherein
the recess (6) and/or the projection (7) of one component (3; 4) have at least one protuberance (11), which is configured to interfere with the projection (7) and/or the recess (6) of the other component (4; 3);
the component (4) provided with the protuberance (11) is manufactured through additive manufacturing; and
the insertion of the projection (7) of the second component (4) into the recess (6) of the first component (3) causes the deformation of the protuberance (11).

2. The method according to claim 1, wherein the protuberance (11) is an integral part, without gaps, of the respective component (4).

3. The method according to claim 2, wherein the protuberance (11) is made of the same material as the rest of the respective component (4).

4. The method according to claim 1 or 2, wherein the protuberance (11) is made of a different material having a smaller hardness than a material making up the other component (3) without the protuberance (11).

5. The method according to claim 1, 2 or 3, wherein the component (4) provided with the protuberance (11) is made of a different material having a smaller hardness than a material making up the other component (3) without the protuberance (11).

6. The method according to one of the claims from 1 to 5, wherein the recess (6) and/or the projection (7) have a plurality of protuberances (11) arranged at intervals from one another.

7. The method according to claim 6, wherein:
the two components (3, 4) are caused to slide relative to one another along a sliding direction in order to insert the projection (7) of the second component (4) into the recess (6) of the first component (3); and
the protuberances (11) are aligned along the sliding direction.

8. The method according to one of the claims from 1 to 7, wherein the protuberance (11) has a spherical curvature.

9. The method according to one of the claims from 1 to 8, wherein the protuberance (11) is present in the projection (7) of the second component (4).

10. The method according to claim 9, wherein:
the projection (7) is shaped like a dovetail having two side walls (9) inclined relative to one another and a base wall (10) interposed between the two side walls (9); and
the protuberance (11) is arranged on one of the two side walls (9).

11. The method according to one of the claims from 1 to 10, wherein the protuberance (11) is only present in the projection (7) of the second component (4).

12. The method according to one of the claims from 1 to 8, wherein the protuberance (11) is only present in the recess (6) of the first component (3).

13. The method according to one of the claims from 1 to 12, wherein the insertion of the projection (7) of the second component (4) into the recess (6) of the first component (3) also causes a partial removal of the protuberance (11).

14. An automatic machine for manufacturing or packing consumer articles and comprising a first and a second component (3, 4), which were interlocked to one another according to the method claimed in one of the claims from 1 to 13.

15. The automatic machine according to claim 14 wherein
the first component (3) is provided with a recess (6);
the second component (4) is provided with the projection (7) reproducing the shape of the recess (6) and is joined to the first component (3) as the projection (7) is inserted and locked in the recess (6) of the first component (3);
the recess (6) and/or the projection (7) of one component (3; 4) have the protuberance (11), which is configured to interfere with the projection (7) and/or the recess (6) of the other component (4; 3);
the component (4) provided with the protuberance (11) is manufactured through additive manufacturing; and
the protuberance (11) is at least partially deformed due to the insertion of the projection (7) of the second component (4) into the recess (6) of the first component (3).

16. The automatic machine according to claim 15 and comprising a feeding drum for feeding blanks comprising:
two bases (2) with a circular shape;
a plurality of support elements (3), which are axially arranged and join the two bases (2) to one another and define the first components (3); and
a plurality of transport bars (4), each of which is coupled to a support element (3),
defines a second component (4) and is provided with at least one sucking holding head (5).

## Patentansprüche

1. Verfahren zum Verzahnen von zwei Komponenten (3, 4) einer automatischen Maschine zum Herstellen oder Verpacken von Konsumgütern, wobei das Verfahren die Schritte umfasst:
Herstellen einer ersten Komponente (3) mit einer Aussparung (6);
Herstellen einer zweiten Komponente (4) mit einem Vorsprung (7), der die Form der Aussparung (6) wiedergibt; und
Verbinden der zwei Komponenten (3, 4) durch Einsetzen des Vorsprungs (7) der zweiten Komponente (4) in die Aussparung (6) der ersten Komponente (3) und Sichern darin;
wobei die Aussparung (6) und/oder der Vorsprung (7) einer Komponente (3; 4) mindestens einen Höcker (11) aufweisen, der konfiguriert ist, mit dem Vorsprung (7) und/oder der Aussparung (6) der anderen Komponente (4; 3) zu interferieren;
die Komponente (4), die mit dem Höcker (11) versehen ist, durch additive Fertigung hergestellt wird; und
das Einsetzen des Vorsprungs (7) der zweiten Komponente (4) in die Aussparung (6) der ersten Komponente (3) die Verformung des Höckers (11) bewirkt.

2. Verfahren nach Anspruch 1, wobei der Höcker (11) ein integraler Bestandteil ohne Zwischenräume der jeweiligen Komponente (4) ist.

3. Verfahren nach Anspruch 2, wobei der Höcker (11) aus demselben Material wie der Rest der jeweiligen Komponente (4) hergestellt ist.

4. Verfahren nach Anspruch 1 oder 2, wobei der Höcker (11) aus einem anderen Material mit einer geringeren Härte als ein Material, das die andere Komponente (3) ohne den Höcker (11) bildet, hergestellt ist.

5. Verfahren nach Anspruch 1, 2 oder 3, wobei die Komponente (4), die mit dem Höcker (11) versehen ist, aus einem anderen Material mit einer geringeren Härte als ein Material, das die andere Komponente (3) ohne den Höcker (11) bildet, hergestellt ist.

6. Verfahren nach einem der Ansprüche von 1 bis 5, wobei die Aussparung (6) und/oder der Vorsprung (7) mehrere Höcker (11) aufweisen, die in Abständen voneinander angeordnet sind.

7. Verfahren nach Anspruch 6, wobei:
bewirkt wird, dass die zwei Komponenten (3; 4) veranlasst werden, in Bezug aufeinander in einer Gleitrichtung zu gleiten, um den Vorsprung (7) der zweiten Komponente (4) in die Aussparung (6) der ersten Komponente (3) einzusetzen; und
die Höcker (11) entlang der Gleitrichtung ausgerichtet sind.

8. Verfahren nach einem der Ansprüche von 1 bis 7, wobei der Höcker (11) eine sphärische Krümmung aufweist.

9. Verfahren nach einem der Ansprüche von 1 bis 8, wobei der Höcker (11) in dem Vorsprung (7) der zweiten Komponente (4) vorhanden ist.

10. Verfahren nach Anspruch 9, wobei:
der Vorsprung (7) wie ein Schwalbenschwanz geformt ist, der zwei Seitenwände (9), die in Bezug aufeinander geneigt sind, und eine Bodenwand (10), die zwischen den zwei Seitenwänden (9) eingefügt ist, aufweist; und
der Höcker (11) auf einer der zwei Seitenwände (9) angeordnet ist.

11. Verfahren nach einem der Ansprüche von 1 bis 10, wobei der Höcker (11) lediglich in dem Vorsprung (7) der zweiten Komponente (4) vorhanden ist.

12. Verfahren nach einem der Ansprüche von 1 bis 8, wobei der Höcker (11) lediglich in der Aussparung (6) der ersten Komponente (3) vorhanden ist.

13. Verfahren nach einem der Ansprüche von 1 bis 12, wobei das Einsetzen des Vorsprungs (7) der zweiten Komponente (4) in die Aussparung (6) der ersten Komponente (3) außerdem ein teilweises Entfernen des Höckers (11) bewirkt.

14. Automatische Maschine zum Herstellen oder Verpacken von Konsumgütern und umfassend eine erste und eine zweite Komponente (3, 4), die gemäß dem Verfahren nach einem der Ansprüche von 1 bis 13 miteinander verzahnt worden sind.

15. Automatische Maschine nach Anspruch 14, wobei
die erste Komponente (3) mit einer Aussparung (6) versehen ist;
die zweite Komponente (4) mit dem Vorsprung (7) versehen ist, der die Form der Aussparung (6) wiedergibt, und mit der ersten Komponente (3) verbunden wird, indem der Vorsprung (7) in die Aussparung (6) der ersten Komponente (3) eingesetzt und gesichert wird;
die Aussparung (6) und/oder der Vorsprung (7) einer Komponente (3; 4) den Höcker (11) aufweisen, der konfiguriert ist, mit dem Vorsprung (7) und/oder der Aussparung (6) der anderen Komponente (4; 3) zu interferieren;
die Komponente (4), die mit dem Höcker (11) versehen ist, durch additive Fertigung hergestellt wird; und
der Höcker (11) aufgrund des Einsetzens des Vorsprungs (7) der zweiten Komponente (4) in die Aussparung (6) der ersten Komponente (3) zumindest teilweise verformt wird.

16. Automatische Maschine nach Anspruch 15 und umfassend eine Zuführtrommel zum Zuführen von Rohlingen, umfassend;
zwei Böden (2) mit einer Kreisform;
mehrere Trägerelemente (3), die axial angeordnet sind und die zwei Böden (2) miteinander verbinden und die ersten Komponenten (3) definieren; und
mehrere Transportstangen (4), die jeweils mit einem Trägerelement (3) gekoppelt sind, eine zweite Komponente (4) definieren und mit mindestens einem Ansaughaltekopf (5) versehen sind.

## Revendications

1. Méthode de verrouillage mutuel de deux composants (3, 4) d'une machine automatique pour fabriquer ou emballer des articles de consommation ; la méthode comprend les étapes de :
fabrication d'un premier composant (3) avec un évidement (6) ;
fabrication d'un second composant (4) avec une saillie (7) reproduisant la forme de l'évidement (6) ; et
liaison des deux composants (3, 4) par insertion et verrouillage de la saillie (7) du second composant (4) dans l'évidement (6) du premier composant (3) ;
dans laquelle
l'évidement (6) et/ou la saillie (7) d'un composant (3 ; 4) présentent au moins une protubérance (11), qui est configurée pour interférer avec la saillie (7) et/ou l'évidement (6) de l'autre composant (4 ; 3) ;
le composant (4) pourvu de la protubérance (11) est fabriqué par fabrication additive ; et
l'insertion de la saillie (7) du second composant (4) dans l'évidement (6) du premier composant (3) provoque la déformation de la protubérance (11).

2. Méthode selon la revendication 1, dans laquelle la protubérance (11) est une partie intégrante, sans interstices, du composant (4) respectif.

3. Méthode selon la revendication 2, dans laquelle la protubérance (11) est réalisée dans le même matériau que le reste du composant (4) respectif.

4. Méthode selon la revendication 1 ou 2, dans laquelle la protubérance (11) est réalisée dans un matériau différent présentant une dureté inférieure à celle d'un matériau constituant l'autre composant (3) sans la protubérance (11).

5. Méthode selon la revendication 1, 2 ou 3, dans laquelle le composant (4) pourvu de la protubérance (11) est réalisé dans un matériau différent présentant une dureté inférieure à celle d'un matériau constituant l'autre composant (3) sans la protubérance (11).

6. Méthode selon l'une des revendications 1 à 5, dans laquelle l'évidement (6) et/ou la saillie (7) présentent une pluralité de protubérances (11) agencées à intervalles les unes des autres.

7. Méthode selon la revendication 6, dans laquelle :
les deux composants (3, 4) sont amenés à coulisser l'un par rapport à l'autre le long d'une direction de coulissement afin d'insérer la saillie (7) du second composant (4) dans l'évidement (6) du premier composant (3) ; et
les protubérances (11) sont alignées le long de la direction de coulissement.

8. Méthode selon l'une des revendications 1 à 7, dans laquelle la protubérance (11) présente une courbure sphérique.

9. Méthode selon l'une des revendications 1 à 8, dans laquelle la protubérance (11) est présente dans la saillie (7) du second composant (4).

10. Méthode selon la revendication 9, dans laquelle :
la saillie (7) est en forme de queue d'aronde présentant deux parois latérales (9) inclinées l'une par rapport à l'autre et une paroi de base (10) interposée entre les deux parois latérales (9) ; et
la protubérance (11) est agencée sur l'une des deux parois latérales (9).

11. Méthode selon l'une des revendications 1 à 10, dans laquelle la protubérance (11) n'est présente que dans la saillie (7) du second composant (4).

12. Méthode selon l'une des revendications 1 à 8, dans laquelle la protubérance (11) n'est présente que dans l'évidement (6) du premier composant (3).

13. Méthode selon l'une des revendications 1 à 12, dans laquelle l'insertion de la saillie (7) du second composant (4) dans l'évidement (6) du premier composant (3) provoque également un retrait partiel de la protubérance (11).

14. Machine automatique pour fabriquer ou emballer des articles de consommation et comprenant un premier et un second composant (3, 4), qui ont été verrouillés mutuellement l'un avec l'autre selon la méthode revendiquée dans l'une des revendications 1 à 13.

15. Machine automatique selon la revendication 14, dans laquelle
le premier composant (3) est pourvu d'un évidement (6) ;
le second composant (4) est pourvu de la saillie (7) reproduisant la forme de l'évidement (6) et est relié au premier composant (3) au fur et à mesure que la saillie (7) est insérée et verrouillée dans l'évidement (6) du premier composant (3) ;
l'évidement (6) et/ou la saillie (7) d'un composant (3 ; 4) présentent la protubérance (11), qui est configurée pour interférer avec la saillie (7) et/ou l'évidement (6) de l'autre composant (4 ; 3) ;
le composant (4) pourvu de la protubérance (11) est fabriqué par fabrication additive ; et
la protubérance (11) est au moins partiellement déformée du fait de l'insertion de la saillie (7) du second composant (4) dans l'évidement (6) du premier composant (3).

16. Machine automatique selon la revendication 15 et comprenant un tambour d'alimentation pour l'alimentation en ébauches comprenant :
deux bases (2) avec une forme circulaire ;
une pluralité d'éléments de support (3), qui sont agencés axialement et relient les deux bases (2) l'une à l'autre et définissent les premiers composants (3) ; et
une pluralité de barres de transport (4), dont chacune est couplée à un élément de support (3), définit un second composant (4) et est pourvue d'au moins une tête de maintien d'aspiration (5).
